# EUROPEAN PATENT APPLICATION

(11) **EP 4 851 117 A1**
(43) Date of publication of application: **09.12.2026**
(21) Application number: 25785481.0
(22) Date of filing: 05.03.2025
(51) Int. Cl.: C03C 3/108, C03C 4/00, C03C 23/00, G02B 1/00

(54) **STRONG STRAY-LIGHT ABSORPTION ANTI-HALATION PHOTOELECTRIC GLASS, AND PREPARATION METHOD THEREFOR AND USE THEREOF**

(30) Priority: 07.04.2024 CN 202410409330
(71) Applicant: CNBM Photonics Technology Co., Ltd., Zaozhuang, Shandong 277102 (CN)
(72) Inventor: JIA, Jinsheng, Zaozhuang, Shandong 277102 (CN); ZHANG, Yang, Zaozhuang, Shandong 277102 (CN); ZHANG, Meilun, Zaozhuang, Shandong 277102 (CN); ZHOU, You, Zaozhuang, Shandong 277102 (CN); LV, Xueliang, Zaozhuang, Shandong 277102 (CN); LI, Zijin, Zaozhuang, Shandong 277102 (CN); HONG, Sheng, Zaozhuang, Shandong 277102 (CN); ZHENG, Jingming, Zaozhuang, Shandong 277102 (CN); YANG, Jinhui, Zaozhuang, Shandong 277102 (CN); HAN, Yu, Zaozhuang, Shandong 277102 (CN)
(74) Representative: Lorenz Seidler Gossel Part. mbB
(86) International application number: PCT/CN2025/080744
(87) International publication number: WO 2025/214001

(57) **Abstract**

Provided in the present application are strong stray-light absorption anti-halation photoelectric glass, and a preparation method therefor and the use thereof. The strong stray-light absorption anti-halation photoelectric glass comprises a light-transmitting effective area. The composition of the light-transmitting effective area comprises, in percentages by mass: 71-80% of SiO₂, 5-9% of B₂O₃, 3-8% of Al₂O₃, 5.4-9% of an alkali metal oxide, 2.3-5.2% of an alkaline earth metal oxide, 0.2-0.4% of Bi₂O₃, 0.2-0.4% of PbO, 0-0.2% of BeO, 0.1-0.2% of CeO₂ and 0-0.2% of Yb₂O₃. The effective area of the strong stray-light absorption anti-halation photoelectric glass has good optical transmission performance, and a light absorption area has good stray-light elimination performance and high cathode sensitivity performance.

## Description

### CROSS-REFERENCE TO RELATED APPLICATION

The present invention claims priority to the Chinese patent application filed with the China National Intellectual Property Administration on April 7, 2024, having the application number 202410409330.X and entitled "STRONG STRAY-LIGHT ABSORPTION ANTI-HALATION PHOTOELECTRIC GLASS, AND PREPARATION METHOD THEREFOR AND USE THEREOF," the entire contents of which are incorporated herein by reference and constitute a part of the present invention for all purposes.

### TECHNICAL FIELD

The present application relates to optical glass materials, and in particular to an anti-halation photoelectric glass having strong stray-light absorption, and a preparation method and use thereof.

### BACKGROUND

Any discussion of the prior art throughout the specification should not be regarded as an admission that such prior art is widely known or forms part of the common general knowledge in the art.

An anti-veiling-glare (AVG) glass input window, as a key input-window component of super-second-generation and third-generation low-light-level night-vision devices, plays an important role in improving device performance. Such a glass window utilizes its high transmittance in ultraviolet, visible, and near-infrared spectral ranges to realize broad-spectrum detection and observation capabilities. More critically, by means of a in-situ formation technique using the glass substrate itself, a high-efficiency light-absorbing layer is formed around an effective area of the glass input window. This light-absorbing layer can absorb more than 99.5% of incident stray light, effectively suppressing halo formation in low-light-level imaging, thereby markedly improving cathode luminous sensitivity, image clarity, and observation range of a night-vision device.

However, in the manufacture of anti-halation photoelectric glass, a major challenge encountered is how to manufacture a glass material that can effectively absorb stray light without impairing device performance. Conventional methods, such as using Corning 7056 glass and some borosilicate glasses, produce a black glass layer on the surface by heating in a hydrogen environment. Although stray light can be absorbed to a certain extent, the absorption effects produced by trace arsenic trioxide, antimony trioxide, halogen ions, and a small amount of heavy-metal or precious-metal element ions in these glass materials often fail to meet practical requirements. This is because, in order to sufficiently absorb stray light and meet use requirements, not only is a relatively high concentration of ions capable of producing color centers or being reduced required, but also the black glass layer cannot be excessively thin.

Current solutions include introducing environmentally friendly oxides such as bismuth oxide, and exploring the use of precious-metal elements such as palladium, tellurium, and rhodium. These methods are intended to increase the thickness of the surface black glass layer after hydrogen treatment and reduce light transmittance at a wavelength of 900 nm to below 5%. Nevertheless, anti-veiling-glare input-window glass contains various types of ions, which readily react with a multialkali photocathode to cause poisoning. This not only reduces central transmittance, but also lowers cathode luminous sensitivity, which is typically below 800 µA/lm. Therefore, although relatively high cathode luminous sensitivity can be obtained to some extent by introducing variable-valence environmentally friendly oxides, these solutions still have difficulty satisfying the dual requirements of high effective-area transmittance and low light-absorbing-layer transmittance.

### SUMMARY OF THE INVENTION

Therefore, an object of the present application is to provide an anti-halation photoelectric glass that can efficiently absorb stray light without impairing cathode luminous sensitivity and device performance and that also has good optical transmittance. The effective area of the anti-halation photoelectric glass provided by the present invention has a transmittance of ≥90.2% in a wavelength range of 350-400 nm and a transmittance of ≥92.4% in a wavelength range of 400-1000 nm; a black light-absorbing layer has a thickness of ≥0.6 mm, has a transmittance of 0 in a wavelength range of 350-800 nm, and has a transmittance of ≤1.8% in a wavelength range of 800-1000 nm. The average cathode luminous sensitivity is ≥850 µA/lm, and the glass may also have relatively good chemical stability, thermal stability, and mechanical strength, good forming and processing performance, and excellent overall performance.

Specifically, the present invention provides the following technical features. A combination of one or more of the following technical features constitutes a technical solution of the present invention.

In a first aspect of the present invention, a glass composition is provided, which, based on mass percentage, comprises: SiO₂ 71-80%, B₂O₃ 5-9%, Al₂O₃ 3-8%, alkali metal oxides 5.4-9%, alkaline earth metal oxides 2.3-5.2%, Bi₂O₃ 0.2-0.4%, PbO 0.2-0.4%, BeO 0-0.2%, CeO₂ 0.1-0.2%, and Yb₂O₃ 0-0.2%.

In the present invention, SiO₂ is a glass-forming oxide, is the main body of a glass-forming network, and is a component that plays a principal role in the glass network. The content of silicon dioxide can reduce the coefficient of thermal expansion of the glass and improve thermal stability, chemical stability, softening temperature, heat resistance, hardness, mechanical strength, and the like of the glass; however, an excessively high content also increases the melting point of the glass, increases the viscosity during high-temperature melting of the glass, and causes difficulty in melting. In the embodiments of the present invention, based on mass percentage, the content of SiO₂ is 71-80%. In some embodiments of the present invention, based on mass percentage, the content of SiO₂ may further be selected from the following content ranges or may be any value within the following content ranges: 74.1-80%, 76-80%, 71-76%, 74.1-76%, 71-74.1%, 71-72%, 71-73%, and the like. In some preferred embodiments of the present invention, based on mass percentage, the content of SiO₂ is preferably 71-76%.

In the present invention, B₂O₃ is not only a glass-forming oxide, which uses boron-oxygen trigonal units [BO₃] and boron-oxygen tetrahedral units [BO₄] as structural units and, in borosilicate glass, forms a structural network together with silicon-oxygen tetrahedra, but also can act as a network modifier to change the structure of the glass, thereby regulating the physical and chemical properties of the glass. B₂O₃ can reduce the expansion coefficient of the glass, improve the thermal stability and chemical stability of the glass, increase the refractive index of the glass, improve the gloss of the glass, and improve the mechanical properties of the glass. When the amount of B₂O₃ added is excessively high, because boron-oxygen trigonal units increase, the expansion coefficient and the like of the glass instead increase, resulting in a boron anomaly. In the embodiments of the present invention, based on mass percentage, the content of B₂O₃ is 5-9%. In some embodiments of the present invention, based on mass percentage, the content of B₂O₃ may further be selected from the following content ranges or may be any value within the following content ranges: 6.75-9%, 7.85-9%, 5-7.85%, 6.75-7.85%, 5-6.75%, and the like. In some preferred embodiments of the present invention, based on mass percentage, the content of B₂O₃ is 6.75-9%.

In the present invention, Al₂O₃ is an intermediate oxide. When the molar ratio of Na₂O to Al₂O₃ in the glass is greater than 1, aluminum-oxygen tetrahedra are formed and constitute a continuous structural network with silicon-oxygen tetrahedra. When the molar ratio of Na₂O to Al₂O₃ is less than 1, octahedra are formed, which function as network modifiers and reside in interstices of the silicon-oxygen structural network. Al₂O₃ can reduce the crystallization tendency of the glass and improve the chemical stability, thermal stability, mechanical strength, hardness, and refractive index of the glass, but excessive addition significantly increases the viscosity of the glass and increases melting difficulty. In the embodiments of the present invention, based on mass percentage, the content of Al₂O₃ is 3-8%. In some embodiments of the present invention, based on mass percentage, the content of Al₂O₃ may further be selected from the following content ranges or may be any value within the following content ranges: 5-8%, 6-8%, 7-8%, 3-6%, 5-6%, 3-5%, and the like. In some preferred embodiments of the present invention, based on mass percentage, the content of Al₂O₃ is 5-8%.

In some embodiments of the present invention, the sum of the contents of SiO₂, B₂O₃, and Al₂O₃ is not less than 87%, preferably not less than 88%, more preferably 87-89%, and still more preferably 87.7-88.2%.

In some embodiments of the present invention, the alkali metal oxides comprise Na₂O, K₂O, and Li₂O. In the present invention, Na₂O, K₂O, and Li₂O are network-modifier oxides of the glass. Alkali metal ions are prone to move and diffuse in the glass matrix, can reduce the viscosity during high-temperature melting of the glass, make the glass readily melt, and serve as good fluxes; however, the amount introduced should not be excessive. Excessive introduction increases the coefficient of thermal expansion of the glass and reduces the chemical stability, thermal stability, and mechanical strength of the glass.

In some embodiments of the present invention, the alkaline earth metal oxides comprise CaO, BaO, and MgO. In the present invention, CaO, BaO, and MgO are all network-modifier oxides. The main role of CaO in the glass is as a stabilizer, that is, to increase the chemical stability and mechanical strength of the glass. However, improper use of CaO may instead increase the crystallization tendency of the glass and render the glass brittle. BaO can increase the refractive index, density, gloss, and chemical stability of the glass, and a small amount of BaO can accelerate melting of the glass. In the present invention, not more than 0.1 wt% of MgO is used to replace part of CaO, so as to slow the hardening rate of the glass and improve forming performance of the glass. MgO can also reduce crystallization tendency and crystallization rate, increase the high-temperature viscosity of the glass, and improve the chemical stability and mechanical strength of the glass.

In some embodiments of the present invention, the content ratio of the alkali metal oxides to the alkaline earth metal oxides is less than 2.5, preferably less than 2, and more preferably less than 1.4. For example, in some embodiments, the content ratio of the alkali metal oxides to the alkaline earth metal oxides is 1-4, preferably 1-1.5, and more preferably 1-1.2.

In some embodiments of the present invention, based on mass percentage, the content of Na₂O is greater than 70% of the total amount of the alkali metal oxides, and this proportion may further be greater than 75%, greater than 78%, greater than 80%, and greater than 81%. In some more preferred embodiments of the present invention, the content of Na₂O accounts for 75%-81.5% of the total amount of the alkali metal oxides, preferably 80-81.5%.

In some embodiments of the present invention, based on mass percentage, the content of Na₂O is 4.4-7%. In some embodiments of the present invention, based on mass percentage, the content of Na₂O may further be selected from the following content ranges or may be any value within the following content ranges: 5-7%, 6-7%, 4.4-6%, 5-6%, 4.4-5%, and the like. In some preferred embodiments of the present invention, based on mass percentage, the content of Na₂O is 4.4-6%.

In some embodiments of the present invention, based on mass percentage, the content of K₂O is 0.5-1%. In some embodiments of the present invention, based on mass percentage, the content of K₂O may further be selected from the following content ranges or may be any value within the following content ranges: 0.7-1%, 0.8-1%, 0.5-0.8%, 0.7-0.8%, 0.5-0.7%, and the like. In some preferred embodiments of the present invention, based on mass percentage, the content of K₂O is 0.5-0.8%.

In some embodiments of the present invention, based on mass percentage, the content of Li₂O is 0.5-1%. In some embodiments of the present invention, based on mass percentage, the content of Li₂O may further be selected from the following content ranges or may be any value within the following content ranges: 0.7-1%, 0.5-0.7%, 0.5-0.8%, 0.5-0.6%, and the like.

In some embodiments of the present invention, the content of BaO is greater than 65% of the total amount of the alkaline earth metal oxides, and this proportion may further be greater than 69%, greater than 71%, and greater than 78%. In some preferred embodiments of the present invention, the content of BaO accounts for 69-78.5% of the total amount of the alkaline earth metal oxides, further preferably 69-71%.

In some embodiments of the present invention, based on mass percentage, the content of CaO is 0.49-1.5%. In some embodiments of the present invention, based on mass percentage, the content of CaO may further be selected from the following content ranges or may be any value within the following content ranges: 1.07-1.5%, 1.3-1.5%, 0.49-1.3%, 1.07-1.3%, 0.49-1.07%, and the like. In some preferred embodiments of the present invention, based on mass percentage, the content of CaO is 1.07-1.5%.

In some embodiments of the present invention, based on mass percentage, the content of BaO is 1.8-3.6%. In some embodiments of the present invention, based on mass percentage, the content of BaO may further be selected from the following content ranges or may be any value within the following content ranges: 2.5-3.6%, 3.3-3.6%, 1.8-3.3%, 2.5-3.3%, 1.8-2.5%, and the like. In some preferred embodiments of the present invention, based on mass percentage, the content of BaO is 2.5-3.6%.

In some embodiments of the present invention, based on mass percentage, the content of MgO is 0.01-0.1%. In some embodiments of the present invention, based on mass percentage, the content of MgO may further be selected from the following content ranges or may be any value within the following content ranges: 0.03-0.1%, 0.07-0.1%, 0.01-0.07, 0.03-0.07%, 0.01-0.03%, and the like. In some preferred embodiments of the present invention, based on mass percentage, the content of MgO is 0.03-0.1%.

In the present invention, the addition of Bi₂O₃ and PbO plays an important role in improving the properties of the glass. PbO, as a network-modifier oxide, captures oxygen ions in the Si-O network and causes breakage of the Si-O network to form non-bridging oxygen, which not only increases the coefficient of thermal expansion of the glass but also lowers the melting temperature. Bi₂O₃, which has an effect similar to that of PbO, can significantly reduce the viscosity of the glass and increase the refractive index, such that when Bi₂O₃ and PbO coexist, they can mutually enhance each other's effects. In the embodiments of the present invention, based on mass percentage, the content of PbO is 0.2-0.4%. In some embodiments of the present invention, based on mass percentage, the content of PbO may further be selected from the following content ranges or may be any value within the following content ranges: 0.24-0.4%, 0.3-0.4%, 0.2-0.3%, 0.24-0.3%, 0.2-0.24%, and the like. In some preferred embodiments of the present invention, based on mass percentage, the content of PbO is 0.24-0.4%.

In addition, Bi₂O₃ also helps improve the thermal stability of the glass and enhance light-absorbing capability. In particular, the reducing property of the Bi element in a high-temperature hydrogen atmosphere can be used to optimize the anti-halation effect, which provides new possibilities for the application of the glass material. However, the introduced amount of Bi₂O₃ needs to be precisely controlled, so as to avoid reduced chemical stability of the glass and severe corrosion of a melting vessel caused by excessive addition of Bi₂O₃. Excessive Bi₂O₃ may also promote devitrification of the glass and affect its transparency and optical uniformity, whereas an insufficient Bi₂O₃ content makes it difficult to fully exert its effect of improving optical properties.

In the embodiments of the present invention, based on mass percentage, the content of Bi₂O₃ is 0.2-0.4%. In some embodiments of the present invention, based on mass percentage, the content of Bi₂O₃ may further be selected from the following content ranges or may be any value within the following content ranges: 0.24-0.4%, 0.3-0.4%, 0.2-0.3%, 0.24-0.3%, 0.2-0.24%, and the like. In some preferred embodiments of the present invention, based on mass percentage, the content of Bi₂O₃ is 0.24-0.4%.

In the present invention, the main purpose of introducing CeO₂ is to improve the ultraviolet absorbing ability of the glass, so that the glass can maintain color stability under irradiation by strong radiation. In addition, CeO₂ can decompose at a melting temperature to release oxygen, and may serve as a fining agent to effectively improve the transmittance of the glass. In the embodiments of the present invention, based on mass percentage, the content of CeO₂ is 0.1-0.2%. In some embodiments of the present invention, based on mass percentage, the content of CeO₂ may further be selected from the following content ranges or may be any value within the following content ranges: 0.12-0.2%, 0.15-0.2%, 0.1-0.15%, 0.12-0.15%, 0.1-0.12%, and the like. In some preferred embodiments of the present invention, based on mass percentage, the content of CeO₂ is 0.12-0.2%.

In the embodiments of the present invention, the synergistic effect of PbO, Bi₂O₃, and CeO₂ not only optimizes the physicochemical properties of the glass, but can also improve optoelectronic performance by forming a light-absorbing layer in the glass.

In some embodiments of the present invention, based on mass percentage, the sum of the contents of Bi₂O₃, PbO, and CeO₂ is not less than 0.5%, and this value may further be not less than 0.6%, not less than 0.65%, not less than 0.7%, not less than 0.75%, not less than 0.8%, not less than 0.9%, and not less than 1.0%. In some preferred embodiments of the present invention, the sum of the contents of Bi₂O₃, PbO, and CeO₂ may be 0.5-1%, 0.6-1%, 0.65-1%, 0.7-1%, 0.75-1%, 0.8-1%, and 0.9-1%.

In some embodiments of the present invention, based on mass percentage, the content ratio of Bi₂O₃, PbO, and CeO₂ is 2:2:1.

In some embodiments of the present invention, based on mass percentage, the content ratio of Bi₂O₃ to PbO is 1:1.

In some embodiments of the present invention, based on mass percentage, the sum of the contents of Bi₂O₃ and PbO is 0.4-0.8%, preferably 0.45-0.8%, and more preferably 0.6-0.8%.

In the present invention, Yb in Yb2O3 is a variable-valence element. Its absorption and emission peaks are both located in the near-infrared region and do not affect the visible-light transmittance of the glass. At the same time, the addition of Yb can reduce the coefficient of thermal expansion of the glass and improve its mechanical properties by densifying the microstructure of the glass. However, it should be noted that, in the embodiments of the present invention, the amount of Yb₂O₃ should be limited to no more than 0.2 wt% to avoid devitrification. In some embodiments of the present invention, based on mass percentage, the content of Yb₂O₃ is 0-0.2%. In some embodiments of the present invention, based on mass percentage, the content of Yb₂O₃ may further be selected from the following content ranges or may be any value within the following content ranges: 0, 0-0.05%, 0-0.1%, 0-0.16%, 0-0.2%, 0.1-0.2%, 0.16-0.2%, 0.05-0.16%, 0.1-0.16%, 0.05-0.1%, and the like. In some preferred embodiments of the present invention, based on mass percentage, the content of Yb₂O₃ is 0 or 0.16-0.2%.

In some embodiments of the present invention, the content of CeO₂ is not less than the content of Yb₂O₃.

In addition, in the present invention, the variable-valence metal oxide BeO may optionally be added in an amount of not greater than 0.2%. BeO has relatively high thermal conductivity, and this characteristic can help the glass dissipate heat generated during processing or use more effectively, which is beneficial to improving the performance of the glass in high-temperature applications. At the same time, BeO can improve the mechanical strength and hardness of the material, making the glass more durable and more wear resistant. In the embodiments of the present invention, based on mass percentage, the content of BeO is 0-0.2%. In some embodiments of the present invention, based on mass percentage, the content of BeO may further be selected from the following content ranges or may be any value within the following content ranges: 0, 0-0.1%, 0-0.12%, 0-0.15%, 0.12-0.2%, 0.15-0.2%, 0.1-0.15%, 0.12-0.15%, 0.1-0.12%, and the like. In some preferred embodiments of the present invention, based on mass percentage, the content of BeO is 0 or 0.12-0.2%.

In some embodiments of the present invention, based on mass percentage, the sum of the contents of PbO, Bi₂O₃, BeO, and CeO₂ is not less than 0.5%, and this proportion may further be not less than 0.6%, not less than 0.72%, not less than 0.8%, not less than 0.9%, not less than 1.0%, and not less than 1.2%. In some preferred embodiments of the present invention, the sum of the contents of PbO, Bi₂O₃, BeO, and CeO₂ is 0.5-1.2%, 0.6-1.2%, preferably 0.72-1.2%, and more preferably 1-1.2%. In some embodiments of the present invention, based on mass percentage, the content ratio of Bi₂O₃, PbO, BeO, and CeO₂ is 2:2:1:1.

In some embodiments of the present invention, based on mass percentage, the glass composition comprises: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0-0.2%, CeO₂ 0.1-0.2%, and Yb₂O₃ 0-0.2%.

In some embodiments of the present invention, based on mass percentage, the glass composition comprises: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0.1-0.2%, CeO₂ 0.1-0.2%, and Yb₂O₃ 0-0.2%.

In some embodiments of the present invention, based on mass percentage, the glass composition comprises: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0-0.2%, CeO₂ 0.1-0.2%, and Yb₂O₃ 0.05-0.2%.

In some embodiments of the present invention, based on mass percentage, the glass composition comprises: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0.1-0.2%, CeO₂ 0.1-0.2%, and Yb₂O₃ 0.05-0.2%.

In some embodiments of the present invention, based on mass percentage, the glass composition comprises: SiO₂ 71-76%, B₂O₃ 6-9%, Al₂O₃ 5-8%, Na₂O 4.4-6%, K₂O 0.5-0.8%, Li₂O 0.5-1%, CaO 1.07-1.5%, BaO 2.5-3.6%, MgO 0.03-0.1%, Bi₂O₃ 0.24-0.4%, PbO 0.24-0.4%, BeO 0.12-0.2%, CeO₂ 0.12-0.2%, and Yb₂O₃ 0.05-0.2%.

In some embodiments of the present invention, the glass prepared from the glass composition has good transmittance, and has a transmittance of ≥90.0% in a wavelength range of 350-400 nm and a transmittance of ≥92.4% in a wavelength range of 400-1000 nm. For example, in some embodiments, the minimum transmittance of the glass in the wavelength range of 350-400 nm is ≥90.2%, ≥90.3%, ≥90.4%, ≥90.5%, ≥90.6%, ≥90.7%, ≥90.8%, ≥90.69%, ≥91%, or ≥91.5%, and the minimum transmittance of the glass in the wavelength range of 400-1000 nm is ≥92.4%, ≥92.5%, ≥92.6%, ≥92.7%, ≥92.8%, ≥92.9%, ≥93%, or ≥93.5%. Specifically, in some embodiments, the minimum transmittance of the glass in the wavelength range of 350-400 nm is 90.2-91.5%, further 90.5-91.5%, still further 90.8-91.5%, and preferably 91-91.5%, and the minimum transmittance of the glass in the wavelength range of 400-1000 nm is 92.4-93.6%, further 92.9-93.6%, and still further 93-93.6%.

In some embodiments of the present invention, the glass prepared from the glass composition exhibits favorable thermal expansion characteristics: its coefficient of thermal expansion in the range of 30-300 °C can be stabilized at (55±2)×10⁻⁷/°C; its glass transition temperature T_{g} is ≥555 °C; and its sag temperature Tₛ is ≥650 °C. This indicates that the glass has good thermal processing performance, chemical stability, thermal stability, and mechanical strength.

In some embodiments of the present invention, the glass prepared from the glass composition can form a light-absorbing layer after reduction treatment. The light-absorbing layer has a thickness of ≥0.6 mm, further ≥0.7 mm, and still further ≥0.8 mm; the light-absorbing layer has a transmittance of 0 in a wavelength range of 350-800 nm, and a transmittance of ≤1.8%, further ≤1.4%, ≤1.3%, ≤1.2%, or ≤1.0% in a wavelength range of 800-1000 nm. Specifically, in some embodiments, the transmittance of the light-absorbing layer in the wavelength range of 800-1000 nm is 1.0-1.8%, further 1.0-1.4%, and still further 1.0-1.3%.

In some embodiments of the present invention, the glass prepared from the glass composition has an average cathode luminous sensitivity of ≥850 µA/lm, and may further have an average cathode luminous sensitivity of ≥860 µA/lm or ≥870 µA/lm, and particularly may have an average cathode luminous sensitivity of ≥875 µA/lm. For example, in some embodiments, the average cathode luminous sensitivity is 864-876 µA/lm, further 870-876 µA/lm, and still further 872-876 µA/lm.

In a second aspect of the present invention, a glass blank is provided, which is prepared from the glass composition described in the first aspect above.

In some embodiments of the present invention, the preparation method of the glass blank comprises: uniformly mixing raw materials, melting the mixture at 1350-1400 °C, stirring, fining, and forming at 1150-1250 °C to obtain the glass blank.

The stirring may be mechanical stirring. Stirring can accelerate the homogenization process of a glass melt, and can continuously divide non-uniform regions and coarse cords in the glass melt into fine and short cords. This increases their contact area, thereby facilitating mutual dissolution and diffusion between the glass melt and the cords, and thus causing the cords to gradually disappear or decrease.

In some embodiments of the present invention, the melting time is 20-30 h. This melting time facilitates fining of the glass melt.

In some embodiments of the present invention, the forming time is 10-15 min, and shortening the forming time reduces the generation of secondary bubbles, impurities, and the like.

In some embodiments of the present invention, the glass blank has a transmittance of ≥90.2% in a wavelength range of 350-400 nm and a transmittance of ≥92.4% in a wavelength range of 400-1000 nm. In some embodiments of the present invention, the glass blank has a minimum optical transmittance of ≥90.5% in the wavelength range of 350-400 nm and a minimum optical transmittance of ≥92.5% in the wavelength range of 400-1000 nm. For example, in some embodiments, the minimum transmittance of the glass blank in the wavelength range of 350-400 nm is ≥90.2%, ≥90.3%, ≥90.4%, ≥90.5%, ≥90.6%, ≥90.7%, ≥90.8%, ≥90.69%, ≥91%, or ≥91.5%, and the minimum transmittance of the glass blank in the wavelength range of 400-1000 nm is ≥92.4%, ≥92.5%, ≥92.6%, ≥92.7%, ≥92.8%, ≥92.9%, ≥93%, or ≥93.5%. Specifically, in some embodiments, the minimum transmittance of the glass blank in the wavelength range of 350-400 nm is 90.2-91.5%, further 90.5-91.5%, still further 90.8-91.5%, and preferably 91-91.5%, and the minimum transmittance of the glass blank in the wavelength range of 400-1000 nm is 92.4-93.6, further 92.9-93.6%, and still further 93-93.6%.

In some embodiments of the present invention, the glass blank exhibits favorable thermal expansion characteristics, and its coefficient of thermal expansion in the range of 30-300 °C can be stabilized at (55±2)×10⁻⁷/°C.

In some embodiments of the present invention, the glass blank has good thermal processing performance, chemical stability, thermal stability, and mechanical strength, and its glass transition temperature T_{g} is ≥555 °C and its sag temperature Tₛ is ≥650 °C.

The method of the present invention exhibits process stability. The glass material prepared by the method exhibits stable characteristics, and variations in the process parameters within the above ranges do not cause appreciable fluctuations in the properties of the glass. It will be understood that, within the above process ranges, some higher temperatures can shorten the preparation process compared with lower temperatures. If the processing time is to be minimized, a person skilled in the art may select a relatively higher temperature within the temperature range disclosed in the present invention during operation.

In a third aspect of the present invention, an anti-halation photoelectric glass having strong stray-light absorption is provided, which comprises a light-transmitting effective area. The glass composition of the light-transmitting effective area is the same as the glass composition described in the first aspect above, or the light-transmitting effective area is made of the glass blank described in the second aspect above.

In some embodiments of the present invention, the anti-halation photoelectric glass having strong stray-light absorption further comprises a light-absorbing layer, and the light-absorbing layer is obtained by subjecting the glass constituting the light-transmitting effective area to reduction treatment.

In some embodiments of the present invention, the reduction treatment is performed under a reducing atmosphere, and the temperature, pressure, and time of the reduction treatment are 550-650 °C, 0.01-0.5 MPa, and 3000-15000 min, respectively. For example, in some embodiments of the present invention, the reduction treatment is as follows: the glass blank is processed into a stepped shape, placed in a closed container, and heated to 600 °C; a reducing atmosphere (for example, hydrogen) is introduced; the hydrogen pressure is 0.20 MPa; the hydrogen treatment time is 60 h; and the hydrogen in the closed container is replaced every 15 h.

In some embodiments of the present invention, the light-transmitting effective area of the anti-halation photoelectric glass having strong stray-light absorption has a transmittance of ≥90.0% in a wavelength range of 350-400 nm and a transmittance of ≥92.4% in a wavelength range of 400-1000 nm. For example, in some embodiments, the minimum transmittance of the glass in the wavelength range of 350-400 nm is ≥90.2%, ≥90.3%, ≥90.4%, ≥90.5%, ≥90.6%, ≥90.7%, ≥90.8%, ≥90.69%, ≥91%, or ≥91.5%, and the minimum transmittance of the glass in the wavelength range of 400-1000 nm is ≥92.4%, ≥92.5%, ≥92.6%, ≥92.7%, ≥92.8%, ≥92.9%, ≥93%, or ≥93.5%. Specifically, in some embodiments, the minimum transmittance of the glass in the wavelength range of 350-400 nm is 90.2-91.5%, further 90.5-91.5%, and the minimum transmittance of the glass in the wavelength range of 400-1000 nm is 92.4-93.6%, further 92.9-93.6%, and still further 93-93.6%.

In some embodiments of the present invention, the light-absorbing layer of the anti-halation photoelectric glass having strong stray-light absorption has a thickness of ≥0.6 mm, further ≥0.7 mm, and still further ≥0.8 mm; the light-absorbing layer has a transmittance of 0 in a wavelength range of 350-800 nm, and a transmittance of ≤1.8%, further ≤1.4%, ≤1.3%, ≤1.2%, or ≤1.0% in a wavelength range of 800-1000 nm. Specifically, in some embodiments, the transmittance of the light-absorbing layer in the wavelength range of 800-1000 nm is 1.0-1.8%, further 1.0-1.4%, and still further 1.0-1.3%.

In some embodiments of the present invention, the anti-halation photoelectric glass having strong stray-light absorption has an average cathode luminous sensitivity of ≥850 µA/lm, and may further have an average cathode luminous sensitivity of ≥860 µA/lm or ≥870 µA/lm, and particularly may have an average cathode luminous sensitivity of ≥875 µA/lm. For example, in some embodiments, the average cathode luminous sensitivity is 864-876 µA/lm, further 870-876 µA/lm, and still further 872-876 µA/lm.

In a fourth aspect of the present invention, a method for preparing the anti-halation photoelectric glass having strong stray-light absorption described in the third aspect above is provided, comprising:
uniformly mixing raw materials, melting the mixture at 1350-1400 °C, stirring, fining, and forming at 1150-1250 °C to obtain a glass blank;
after annealing the glass blank, performing cold working treatment, then performing reduction treatment to form a light-absorbing layer on a surface of the glass blank, and finally performing surface treatment to obtain the anti-halation photoelectric glass having strong stray-light absorption.

In the embodiments of the present invention, the preparation method of the glass blank may be as described in the second aspect above.

In the embodiments of the present invention, annealing is performed to eliminate internal stress of the glass and satisfy requirements for subsequent cold working, and the annealing temperature is 500-620 °C.

In the embodiments of the present invention, the purpose of the cold working is mainly to precisely modify the shape, dimensions, surface state, and the like of the glass blank so as to satisfy specific application requirements. Such operations include, but are not limited to, cutting, edging, and the like. A suitable treatment mode may be selected as needed. For example, in some embodiments of the present invention, the glass blank is subjected to core drilling, cylindrical grinding, slicing, and step machining to obtain a stepped glass blank. Then the stepped glass blank is subjected to reduction treatment.

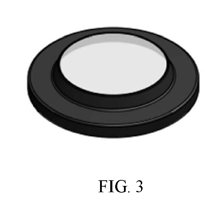

In the embodiments of the present invention, the surface treatment includes, but is not limited to, grinding, polishing, cutting, and the like, so as to adjust the surface state of the glass, including flatness and smoothness. A suitable treatment mode may be selected as needed. For example, in some embodiments of the present invention, the stepped glass blank obtained after cold working is subjected to reduction treatment, a light-absorbing layer is formed on the surface of the stepped glass blank, and then the light-absorbing layers on the upper and lower surfaces of the stepped glass blank are ground off and polished to expose a transparent glass part, while the light-absorbing layers on the remaining surfaces (step surfaces) are retained, thereby obtaining the stepped anti-halation photoelectric glass having strong stray-light absorption. The glass may be used as an anti-veiling-glare glass input window, such as the example shown in FIG. 3, in which the light-transmitting effective area is exposed at the upper and lower surfaces, and the remaining surfaces have a black light-absorbing layer.

In a fifth aspect of the present invention, an optical element is provided, which is made of the glass composition described in the first aspect above or the glass blank described in the second aspect above, or comprises the anti-halation photoelectric glass having strong stray-light absorption described in the third aspect above.

In some embodiments of the present invention, the optical element is an optical window, preferably an anti-veiling-glare glass input window.

In a sixth aspect of the present invention, the present invention provides a low-light-level image intensifier. The low-light-level image intensifier comprises the optical element described in the fifth aspect above.

In some embodiments of the present invention, the optical element is an anti-veiling-glare glass input window.

In a seventh aspect of the present invention, use of the glass composition described in the first aspect above, or the glass blank described in the second aspect above, or the anti-halation photoelectric glass having strong stray-light absorption described in the third aspect above, or the optical element described in the fifth aspect above, or the low-light-level image intensifier described in the sixth aspect above in the optical field or the field of intelligent technology applications is provided.

In some embodiments of the present invention, the use is as an optical window.

In some embodiments of the present invention, the use is for preparing an anti-veiling-glare glass input window of a low-light-level image intensifier.

In some embodiments of the present invention, the use is for preparing an optical system component of a low-light-level night-vision device.

The specific technical features described in all embodiments of the various aspects of the present invention described above may be combined in any suitable manner, provided that no contradiction occurs. To avoid unnecessary repetition, the present invention does not separately describe various possible combinations.

Unless otherwise specified, a numerical range described in the present invention includes all values within the range and includes range values composed of any two values within the range. For example, 0.1-0.2% includes all values between 0.1-0.2% and includes range values composed of any two values within the range (for example, 0.11% and 0.19%), such as 0.11-0.19%; different values of the same indicator appearing in all embodiments of the present invention may be arbitrarily combined to form range values.

One or more of the above technical means can achieve the following beneficial effects:
The present invention provides a glass composition, and an anti-halation photoelectric glass having strong stray-light absorption prepared from the composition. The anti-halation photoelectric glass having strong stray-light absorption provided by the present invention has good transmittance. Its light-transmitting effective area has a transmittance of ≥90.0% in a wavelength range of 350-400 nm and a transmittance of ≥92.4% in a wavelength range of 400-1000 nm; a black light-absorbing layer has a thickness of ≥0.6 mm, has a transmittance of 0 in a wavelength range of 350-800 nm, and has a transmittance of ≤1.8% in a wavelength range of 800-1000 nm. The average cathode luminous sensitivity of the anti-halation glass is ≥850 µA/lm. The high-transmittance anti-halation photoelectric glass having strong stray-light absorption of the present invention is provided with an edge stray-light-absorbing layer, which can effectively eliminate a halo formed by a strong light source and improve image contrast.

The anti-halation photoelectric glass having strong stray-light absorption provided by the present invention has a coefficient of thermal expansion in the range of 30-300 °C that can be stabilized at (55±2)×10⁻⁷/°C, a glass transition temperature T_{g} of ≥555 °C, and a sag temperature Tₛ of ≥650 °C, and exhibits relatively good chemical stability, thermal stability, and mechanical strength, as well as good forming and processing performance.

Existing anti-halation photoelectric glass has low average transmittance in a wavelength range of 400-1000 nm, and it is difficult to improve stray-light absorption performance. In the present invention, by selecting and adjusting the types and proportions of the raw materials and fining agents and utilizing the synergistic effect resulting from the combined introduction of variable-valence ionic components, the anti-halation glass exhibits relatively high optical transmittance, excellent stray-light suppression performance, and high cathode luminous sensitivity, thereby meeting the requirements of advanced image intensifiers and other applications requiring high-performance anti-halation glass materials.

### BRIEF DESCRIPTION OF THE DRAWINGS

The drawings of the specification, which constitute a part of the present application, are used to provide further understanding of the present application. The illustrative embodiments of the present application and the descriptions thereof are used to explain the present application and do not constitute an improper limitation on the present application. The embodiments of the present application are described in detail below with reference to the drawings, in which:

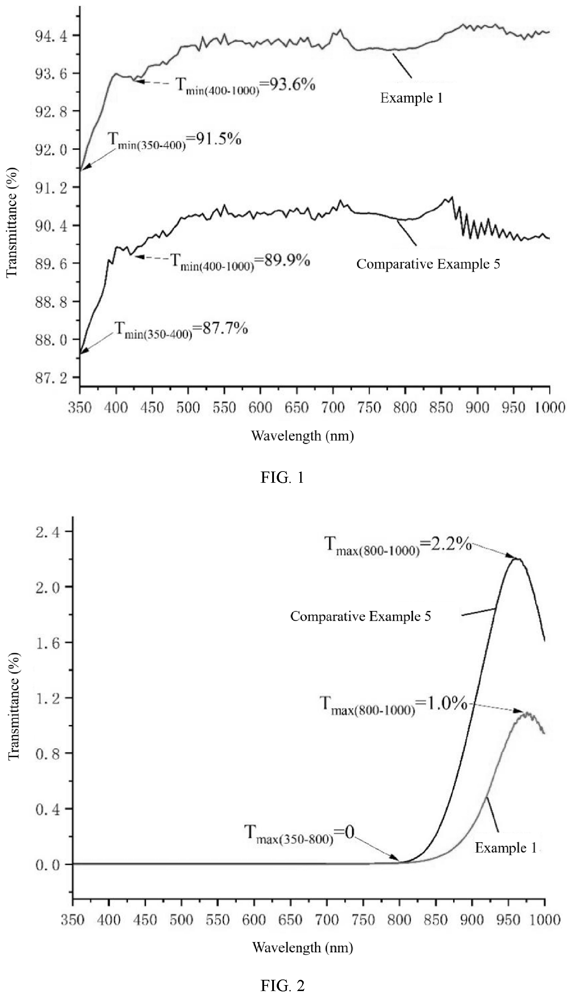

FIG. 1 is a comparison diagram of transmittance of the light-transmitting effective area of the glasses of Example 1 and Comparative Example 5 in the range of 350-1000 nm.
FIG. 2 is a comparison diagram of transmittance of the light-absorbing layer of the glasses of Example 1 and Comparative Example 5 in the range of 350-1000 nm.
FIG. 3 is a photograph of an anti-veiling-glare input window (stepped type).

### DETAILED DESCRIPTION

The present application is further described below with reference to specific examples. It should be understood that these examples are merely used to illustrate the present application and are not intended to limit the scope of the present application. Experimental methods for which specific conditions are not indicated in the following examples are generally carried out under conventional conditions or under conditions recommended by the manufacturer.

Unless otherwise defined, all technical and scientific terms used herein have the meanings commonly understood by those skilled in the art. The reagents or raw materials used in the present application can all be purchased and obtained through conventional channels. Unless otherwise specified, the reagents or raw materials used in the present application are used according to conventional methods in the art or according to the product instructions. In addition, any methods and materials similar or equivalent to those described may be applied to the methods of the present application. The preferred implementation methods and materials described herein are merely exemplary.

### Example 1

The glass composition and physical properties of this example are shown in Table 1.

The preparation method was as follows. The raw materials - quartz sand, boric acid, aluminum hydroxide, sodium nitrate, potassium nitrate, lithium carbonate, barium nitrate, calcium carbonate, basic magnesium carbonate, bismuth trioxide, lead silicate, beryllium oxide, cerium oxide, and titanium oxide-were thoroughly mixed, and were subjected to high-temperature melting at 1350 °C for 30 h with mechanical stirring (10 r/min, 15 h). Auxiliary high-temperature fining was carried out by introducing compressed air into the bottom of the glass melt at a pressure of 0.20 MPa for an aeration time of 10 h. The melt was then formed through an orifice at 1250 °C (forming time: 10 min) into a plate-shaped rough glass blank.

The plate-shaped rough glass blank was placed into an annealing furnace preheated to 550 °C for annealing, so as to eliminate internal stress of the glass and satisfy requirements for subsequent cold working.

The annealed plate-shaped rough glass blank was subjected to cold working steps of core drilling, cylindrical grinding, slicing, and step machining, and then the stepped rough blank was placed in a closed container and heated to 600 °C. Hydrogen was introduced; the hydrogen pressure was 0.20 MPa; the hydrogen treatment time was 60 h; and the hydrogen in the closed container was replaced every 15 h. After reduction treatment, a light-absorbing layer was formed on the surface of the rough glass blank. The light-absorbing layers on the upper and lower surfaces of the rough blank were ground off and polished to expose a transparent glass part, while the light-absorbing layer on the step surface was retained, thereby obtaining the anti-halation photoelectric glass. The glass may serve as an anti-veiling-glare input window, as shown in FIG. 3.

Transmittance was tested using an ultraviolet-visible-infrared (UV-Vis-IR) spectrophotometer.

The thickness of the light-absorbing layer (black layer) formed after reduction of the glass was measured using an optical microscope.

A NETZSCH DIL 402 dilatometer was used to test the coefficient of thermal expansion of the glass sample. For sample preparation, the glass sample was ground and polished into a cylindrical glass rod of Φ6 mm×50 mm, with the two end faces parallel. The heating rate was set to 5 °C/min, and the data acquisition period was 20 ms. The data were plotted as a curve of linear expansion versus temperature, and the coefficient of linear thermal expansion (α), glass transition temperature (T_{g}), and sag temperature (Tₛ) of the glass were obtained by a tangent method. (GB/T 7962.16~2010)

The cathode luminous sensitivity of the anti-veiling-glare input window was measured on a super-second-generation image intensifier tube (the image intensifier tube is a core device of a night-vision device). A specified voltage was applied to the super-second-generation image intensifier tube, and a tungsten filament lamp with a color temperature of 2856 K ± 50 K was used as a light source, such that a specified luminous flux was uniformly distributed, parallel to the input optical axis, over a specified area of the photocathode. When an attenuator was used, the spectral characteristics of input optical radiation should not be changed. The cathode current at this time was measured; after the light source was turned off, the cathode current was measured when no optical radiation was incident on the photocathode. The luminous sensitivity was calculated according to the following formula: $s = \frac{{I}_{1} - {I}_{2}}{Φ}$ where *s* is the luminous sensitivity, in µA/lm; *I*₁ is the cathode current when optical radiation is input, which is the sum of the photocurrent caused by optical radiation and *I*₂, in µA; *I*₂ is the cathode current when no optical radiation is input, which is the sum of the photocathode dark current and internal and external leakage currents, in µA; and Φ is the input luminous flux, in lm. (GJB 7351-2011)

### Example 2

The glass composition and physical properties of this example are shown in Table 1.

The melting temperature in the preparation method was 1400 °C, and the melting time was 20 h; mechanical stirring was performed (15 r/min, 10 h), the forming temperature was 1150 °C, and the forming time was 15 min. The other preparation steps, parameters, and testing processes were the same as those in Example 1.

### Example 3

The glass composition and physical properties of this example are shown in Table 1.

The melting temperature in the preparation method was 1380 °C, and the melting time was 25 h; mechanical stirring was performed (25 r/min, 12 h), the forming temperature was 1200 °C, and the forming time was 12 min. The other preparation steps, parameters, and testing processes were the same as those in Example 1.

### Example 4

The glass composition and physical properties of this example are shown in Table 1.

The melting temperature in the preparation method was 1360 °C, and the melting time was 21 h; mechanical stirring was performed (40 r/min, 11 h), the forming temperature was 1170 °C, and the forming time was 14 min. The other preparation steps, parameters, and testing processes were the same as those in Example 1.

### Example 5

The glass composition and physical properties of this example are shown in Table 1.

The melting temperature in the preparation method was 1370 °C, and the melting time was 22 h; mechanical stirring was performed (40 r/min, 11.5 h), the forming temperature was 1190 °C, and the forming time was 13 min. The other preparation steps, parameters, and testing processes were the same as those in Example 1.

### Example 6

The glass composition and physical properties of this example are shown in Table 1.

The preparation method was the same as that in Example 1.

### Example 7

The glass composition and physical properties of this example are shown in Table 1.

The preparation method was the same as that in Example 1.

### Example 8

The glass composition and physical properties of this example are shown in Table 1.

The preparation method was the same as that in Example 1.

### Example 9

The glass composition and physical properties of this example are shown in Table 1.

The preparation method was the same as that in Example 1.

### Comparative Examples 1-11

The glass compositions and physical properties are shown in Table 2. The introduction of the remaining components, the glass preparation steps, parameters, and testing processes were all the same as those in Example 1.

**Table 1 Components, contents, and physical properties of anti-halation glass of Examples (Ex.) 1-9 of the present invention**

| Compone nt (wt%) | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| SiO₂ | 71 | 80 | 74.1 | 76 | 71.8 | 71.2 | 71.2 | 71.2 | 71.1 |
| B₂O₃ | 9 | 5 | 7.85 | 6.75 | 8.6 | 9 | 9 | 9 | 9 |
| Al₂O₃ | 8 | 3 | 6 | 5 | 8 | 8 | 8 | 8 | 8 |
| Na₂O | 4.4 | 7 | 6 | 5 | 4.4 | 4.4 | 4.4 | 4.4 | 4.4 |
| Li₂O | 0.5 | 1 | 0.7 | 1 | 0.5 | 0.5 | 0.5 | 0.5 | 0.5 |
| K₂O | 0.5 | 1 | 0.8 | 0.7 | 0.5 | 0.5 | 0.5 | 0.5 | 0.5 |
| BaO | 3.6 | 1.8 | 2.5 | 3.3 | 3.6 | 3.6 | 3.6 | 3.8 | 3.6 |
| CaO | 1.5 | 0.49 | 1.07 | 1.3 | 1.5 | 1.5 | 1.5 | 1.5 | 1.5 |
| MgO | 0.1 | 0.01 | 0.03 | 0.07 | 0.1 | 0.1 | 0.1 | 0.1 | 0.1 |
| Bi₂O₃ | 0.4 | 0.2 | 0.3 | 0.24 | 0.2 | 0.4 | 0.4 | 0.4 | 0.4 |
| PbO | 0.4 | 0.2 | 0.3 | 0.24 | 0.2 | 0.4 | 0.4 | 0.4 | 0.3 |
| BeO | 0.2 | 0.1 | 0.15 | 0.12 | 0.2 | 0 | 0.2 | 0 | 0.2 |
| CeO₂ | 0.2 | 0.1 | 0.15 | 0.12 | 0.2 | 0.2 | 0.2 | 0.2 | 0.2 |
| Yb₂O₃ | 0.2 | 0.1 | 0.05 | 0.16 | 0.2 | 0.2 | 0 | 0 | 0.2 |
| Total | 100 | 100 | 100 | 100 | 100 | 100 | 100 | 100 | 100 |

| Test results | | | | | | | | | |
|---|---|---|---|---|---|---|---|---|---|
| α₂₀₋₃₀₀ °C (×10⁻⁷/°C) | 55 | 53 | 54 | 53 | 54 | 57 | 53 | 57 | 56 |
| T_{g} (°C) | 556 | 559 | 557 | 556 | 557 | 555 | 557 | 555 | 555 |
| Tₛ (°C) | 653 | 657 | 653 | 654 | 654 | 651 | 653 | 650 | 655 |

| Compone nt (wt%) | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Min. optical transmitta nce of effective area (350-400 nm)/% | 91.5 | 90.9 | 90.8 | 91.1 | 90.8 | 90.2 | 90.7 | 90.2 | 90.5 |
| Min. optical transmitta nce of effective area (400-1000 nm)/% | 93.6 | 93.1 | 93 | 93.1 | 92.9 | 92.4 | 93 | 92.4 | 92.9 |
| Thickness of black light-absorbing layer/mm | 0.8 | 0.68 | 0.75 | 0.72 | 0.67 | 0.67 | 0.60 | 0.60 | 0.65 |
| Max. optical transmitta nce of black light-absorbing layer (350-800 nm)/% | 0 | 0 | 0 | 0 | 0 | 0 | 0 | 0 | 0 |
| Max. optical transmitta nce of black light-absorbing layer (800-1000 nm)/% | 1.0 | 1.2 | 1.2 | 1.3 | 1.2 | 1.2 | 1.8 | 1.8 | 1.4 |
| Average cathode luminous sensitivity /(µA/lm) | 876 | 872 | 872 | 874 | 871 | 871 | 867 | 864 | 870 |

**Table 2 Components, contents, and physical properties of comparative examples (Comp. Ex.) of the present invention**

| Componen t (wt%) | Comp . Ex. 1 | Comp . Ex. 2 | Comp . Ex. 3 | Comp . Ex. 4 | Comp . Ex. 5 | Comp . Ex. 6 | Comp . Ex. 7 | Comp . Ex. 8 | Comp . Ex. 9 | Comp . Ex. 10 | Comp . Ex. 11 |
|---|---|---|---|---|---|---|---|---|---|---|---|
| SiO₂ | 65 | 66 | 83 | 71.2 | 71 | 71 | 71 | 76 | 71.4 | 70.9 | 70.8 |
| B₂O₃ | 14.5 | 11 | 2 | 9 | 8.8 | 9 | 9 | 6.75 | 9 | 9 | 9 |
| Al₂O₃ | 5.5 | 9 | 1 | 8 | 8 | 8 | 8 | 5 | 8 | 8 | 8 |
| Na₂O | 6.7 | 3 | 3 | 4.4 | 4.4 | 4.4 | 4.4 | 5 | 4.4 | 4.4 | 4.4 |
| Li₂O | 0.5 | 1 | 4 | 0.5 | 0.5 | 0.5 | 0.5 | 1 | 0.5 | 0.5 | 0.5 |
| K₂O | 0.8 | 1 | 4 | 0.5 | 0.5 | 0.5 | 0.5 | 0.7 | 0.5 | 0.5 | 0.5 |
| BaO | 3.7 | 4 | 1.5 | 3.6 | 3.6 | 3.6 | 3.6 | 3.5 | 3.6 | 3.6 | 3.6 |
| CaO | 2.2 | 2 | 0 | 1.5 | 1.5 | 1.5 | 1.5 | 1.5 | 1.5 | 1.5 | 1.5 |
| MgO | 0.6 | 2 | 0 | 0.1 | 0.1 | 0.1 | 0.1 | 0.1 | 0.1 | 0.1 | 0.1 |
| Bi₂O₃ | 0.3 | 0.1 | 0.6 | 0.4 | 0.4 | 0.4 | 0.2 | 0.25 | 0.4 | 0.4 | 0.5 |
| PbO | 0 | 0.4 | 0.6 | 0.4 | 0.4 | 0.4 | 0.2 | 0 | 0 | 0.4 | 0.5 |
| BeO | 0 | 0.15 | 0 | 0.2 | 0.2 | 0 | 0.4 | 0 | 0.2 | 0.2 | 0.2 |
| CeO₂ | 0 | 0.15 | 0.15 | 0 | 0.2 | 0.2 | 0.4 | 0 | 0.2 | 0.3 | 0.2 |
| Yb₂O₃ | 0 | 0.2 | 0.15 | 0.2 | 0.2 | 0.2 | 0.2 | 0 | 0.2 | 0.2 | 0.2 |
| TiO₂ | 0 | 0 | 0 | 0 | 0 | 0.2 | 0 | 0 | 0 | 0 | 0 |
| As₂O₃ | 0.2 | 0 | 0 | 0 | 0.2 | 0 | 0 | 0 | 0 | 0 | 0 |
| Sb₂O₃ | 0 | 0 | 0 | 0 | 0 | 0 | 0 | 0.2 | 0 | 0 | 0 |
| Total | 100 | 100 | 100 | 100 | 100 | 100 | 100 | 100 | 100 | 100 | 100 |
| α₂₀₋₃₀₀ °C (×10⁻⁷/°C) | 54 | 59 | 51 | 55 | 54 | 56 | 58 | 52 | 57 | 54 | 52 |
| T_{g} (°C) | 552 | *550* | 562 | 557 | 554 | 556 | 558 | 557 | 558 | 557 | *555* |
| Tₛ (°C) | 658 | 642 | 661 | 655 | 655 | 656 | 656 | 655 | 657 | 655 | 656 |
| Min. optical transmittan ce of effective area (350-400 nm)/% | 87.8 | 89.6 | 87.5 | 87.3 | 87.7 | 87.1 | 87.0 | 87.2 | 87.3 | 87.4 | 87.1 |
| Min. optical transmittan ce of effective area (400-1000 nm)/% | 91.8 | 90.5 | 89.6 | 89.5 | 89.9 | 89.0 | 89.0 | 89.2 | 89.3 | 89.5 | 89.0 |
| Thickness of light-absorbing layer/mm | 0.43 | 0.45 | 0.65 | 0.40 | 0.45 | 0.69 | 0.42 | 0.38 | 0.60 | 0.63 | 0.67 |
| Max. optical transmittan ce of light-absorbing layer (350-800 nm)/% | 0.3 | 0.3 | 0.05 | 0.4 | 0 | 0.1 | 0.2 | 0.5 | 0.3 | 0.2 | 0.1 |
| Max. optical transmittan ce of black light-absorbing layer (800-1000 nm)/% | 2.4 | 2.8 | 2.3 | 2.5 | 2.2 | 2.2 | 2 | 2.5 | 2.4 | 2.3 | 2.1 |
| Average cathode luminous sensitivity/ (µA/lm) | 860 | 830 | 841 | 822 | 835 | 838 | 823 | 823 | 830 | 833 | 839 |

In Examples 1-9, by appropriately adding the corresponding components and controlling the ratios of the components in the raw materials, the optical transmittance of the effective area of the anti-halation photoelectric glass was higher while relatively high cathode luminous sensitivity was ensured, and the optical transmittance of the black light-absorbing layer was lower. As shown in Table 1, the optical transmittance of the high-transmittance anti-halation photoelectric glass having strong stray-light absorption prepared from the glass components of Examples 1-9 of the present invention was as follows: the effective area of the anti-halation glass had a transmittance of ≥90.2% in a wavelength range of 350-400 nm and a transmittance of ≥92.4% in a wavelength range of 400-1000 nm; the black light-absorbing layer had a thickness of ≥0.6 mm, had a transmittance of 0 in a wavelength range of 350-800 nm, and had a transmittance of ≤1.8% in a wavelength range of 800-1000 nm. The average cathode luminous sensitivity was ≥850 µA/lm, and the overall performance was excellent.

The high-transmittance anti-halation photoelectric glass having strong stray-light absorption provided by the present invention has a coefficient of thermal expansion of (55±2)×10⁻⁷/°C in the range of 30-300 °C, a glass transition temperature T_{g} of ≥555 °C, and a sag temperature Tₛ of ≥650 °C, and exhibits relatively good chemical stability, thermal stability, and mechanical strength, as well as good forming and processing performance.

The above descriptions are merely preferred examples of the present application and are not intended to limit the present application. Although the present application has been described in detail with reference to the foregoing examples, a person skilled in the art may still modify the technical solutions described in the foregoing examples or equivalently replace some technical features thereof. Any modifications, equivalent replacements, improvements, and the like made within the spirit and principle of the present application shall be included within the protection scope of the present application.

## Claims

1. A glass composition consisting of the following components, in percentages by mass: SiO₂ 71-80%, B₂O₃ 5-9%, Al₂O₃ 3-8%, alkali metal oxides 5.4-9%, alkaline earth metal oxides 2.3-5.2%, Bi₂O₃ 0.2-0.4%, PbO 0.2-0.4%, BeO 0-0.2%, CeO₂ 0.1-0.2%, and Yb₂O₃ 0-0.2%;
wherein the alkali metal oxides comprise Na₂O, K₂O, and Li₂O; and the alkaline earth metal oxides comprise CaO, BaO, and MgO.

2. The glass composition according to claim 1, **characterized in that** the glass composition comprises, in percentages by mass, the following components: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0-0.2%, CeO₂ 0.1-0.2%, and Yb₂O₃ 0-0.2%.

3. The glass composition according to claim 1, **characterized in that** the glass composition comprises, in percentages by mass, the following components: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0.1-0.2%, CeO₂ 0.1-0.2%, and Yb₂O₃ 0-0.2%.

4. The glass composition according to claim 1, **characterized in that** the glass composition comprises, in percentages by mass, the following components: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0-0.2%, CeO₂ 0.1-0.2%, and Yb₂O₃ 0.05-0.2%.

5. The glass composition according to claim 1, **characterized in that** the glass composition comprises, in percentages by mass, the following components: SiO₂ 71-80%, B₂O₃ 5-9%, Al₂O₃ 3-8%, Na₂O 4.4-7%, K₂O 0.5-1%, Li₂O 0.5-1%, CaO 0.49-1.5%, BaO 1.8-3.6%, MgO 0.01-0.1%, Bi₂O₃ 0.2-0.4%, PbO 0.2-0.4%, BeO 0.1-0.2%, CeO₂ 0.1-0.2%, and Yb₂O₃ 0.05-0.2%.

6. The glass composition according to claim 1, **characterized in that** the glass composition comprises, in percentages by mass, the following components: SiO₂ 71-76%, B₂O₃ 6-9%, Al₂O₃ 5-8%, Na₂O 4.4-6%, K₂O 0.5-0.8%, Li₂O 0.5-1%, CaO 1.07-1.5%, BaO 2.5-3.6%, MgO 0.03-0.1%, Bi₂O₃ 0.24-0.4%, PbO 0.24-0.4%, BeO 0.12-0.2%, CeO₂ 0.12-0.2%, and Yb₂O₃ 0.05-0.2%.

7. The glass composition according to any one of claims 1 to 5, **characterized in that**, in percentages by mass, the content of SiO₂ is 71-76%.

8. The glass composition according to any one of claims 1 to 6, **characterized in that**, in percentages by mass, the content of B₂O₃ is 6.75-9%.

9. The glass composition according to any one of claims 1 to 5, **characterized in that**, in percentages by mass, the content of Al₂O₃ is 5-8%.

10. The glass composition according to any one of claims 1 to 5, **characterized in that**, in percentages by mass, the content of Na₂O is 4.4-6%.

11. The glass composition according to any one of claims 1 to 5, **characterized in that**, in percentages by mass, the content of K₂O is 0.5-0.8%.

12. The glass composition according to any one of claims 1 to 5, **characterized in that**, in percentages by mass, the content of Li₂O is 0.5-0.8%.

13. The glass composition according to any one of claims 1 to 5, **characterized in that**, in percentages by mass, the content of CaO is 1.07-1.5%.

14. The glass composition according to any one of claims 1 to 5, **characterized in that**, in percentages by mass, the content of BaO is 2.5-3.6%.

15. The glass composition according to any one of claims 1 to 5, **characterized in that**, in percentages by mass, the content of MgO is 0.03-0.1%.

16. The glass composition according to any one of claims 1 to 5, **characterized in that**, in percentages by mass, the content of PbO is 0.24-0.4%.

17. The glass composition according to any one of claims 1 to 5, **characterized in that**, in percentages by mass, the content of Bi₂O₃ is 0.24-0.4%.

18. The glass composition according to any one of claims 1 to 5, **characterized in that**, in percentages by mass, the content of CeO₂ is 0.12-0.2%.

19. The glass composition according to any one of claims 1 to 3, **characterized in that**, in percentages by mass, the content of Yb₂O₃ is 0.

20. The glass composition according to any one of claims 1 to 6, **characterized in that**, in percentages by mass, the content of Yb₂O₃ is or 0.16-0.2%.

21. The glass composition according to any one of claims 1, 2, or 4, **characterized in that**, in percentages by mass, the content of BeO is 0.

22. The glass composition according to any one of claims 1 to 5, **characterized in that**, in percentages by mass, the content of BeO is 0.12-0.2%.

23. The glass composition according to any one of claims 1 to 6, **characterized in that** the content ratio of the alkali metal oxides to the alkaline earth metal oxides is less than 2.5.

24. The glass composition according to any one of claims 1 to 6, **characterized in that** the content of Na₂O is greater than 70% of the total amount of the alkali metal oxides.

25. The glass composition according to any one of claims 1 to 6, **characterized in that** the content of BaO is greater than 65% of the total amount of the alkaline earth metal oxides.

26. The glass composition according to any one of claims 1 to 6, **characterized in that** the sum of the contents of SiO₂, B₂O₃, and Al₂O₃ is not less than 87%.

27. The glass composition according to any one of claims 1 to 6, **characterized in that** the content of CeO₂ is not less than the content of Yb₂O₃.

28. The glass composition according to any one of claims 1 to 6, **characterized in that** the content ratio of Bi₂O₃ to PbO is 1:1.

29. The glass composition according to any one of claims 1 to 6, **characterized in that** the sum of the contents of PbO, Bi₂O₃, BeO, and CeO₂ is not less than 0.5%.

30. The glass composition according to any one of claims 1 to 6, **characterized in that** the content ratio of Bi₂O₃, PbO, BeO, and CeO₂ is 2:2:1:1.

31. A glass blank prepared from the glass composition according to any one of claims 1 to 30.

32. The glass blank according to claim 31, **characterized in that** a method for preparing the glass blank comprises: uniformly mixing raw materials, melting the mixture at 1350-1400 °C, stirring, fining, and forming at 1150-1250 °C to obtain the glass blank.

33. An anti-halation photoelectric glass having strong stray-light absorption, comprising a light-transmitting effective area, wherein the glass composition of the light-transmitting effective area is as defined in any one of claims 1 to 30, or the light-transmitting effective area is made of the glass blank according to claim 31 or 32.

34. The anti-halation photoelectric glass having strong stray-light absorption according to claim 33, **characterized in that** the anti-halation photoelectric glass further comprises a light-absorbing layer, and the light-absorbing layer is obtained by subjecting the glass constituting the light-transmitting effective area to reduction treatment.

35. The anti-halation photoelectric glass having strong stray-light absorption according to claim 34, **characterized in that** the reduction treatment is performed under a reducing atmosphere, and the temperature, pressure, and time of the reduction treatment are 550-650 °C, 0.01-0.5 MPa, and 3000-15000 min, respectively.

36. The anti-halation photoelectric glass having strong stray-light absorption according to any one of claims 33 to 35, **characterized in that** the light-transmitting effective area has a transmittance of ≥90.2% in a wavelength range of 350-400 nm and a transmittance of ≥92.4% in a wavelength range of 400-1000 nm.

37. The anti-halation photoelectric glass having strong stray-light absorption according to claim 34 or 35, **characterized in that** the light-absorbing layer has a thickness of ≥0.6 mm, the light-absorbing layer has a transmittance of 0 in a wavelength range of 350-800 nm, and has a transmittance of ≤1.8% in a wavelength range of 800-1000 nm.

38. The anti-halation photoelectric glass having strong stray-light absorption according to claim 34 or 35, **characterized in that** the anti-halation photoelectric glass having strong stray-light absorption has an average cathode luminous sensitivity of ≥850 µA/lm.

39. A method for preparing the anti-halation photoelectric glass having strong stray-light absorption according to any one of claims 33 to 38, comprising:
uniformly mixing raw materials, melting the mixture at 1350-1400 °C, stirring, fining, and forming at 1150-1250 °C to obtain a glass blank;
annealing the glass blank at 500-620 °C, and then performing cold working treatment;
performing reduction treatment after the cold working treatment to form a light-absorbing layer on a surface of the glass blank;
performing surface treatment on the glass blank having the light-absorbing layer on the surface to obtain the anti-halation photoelectric glass having strong stray-light absorption.

40. The method according to claim 39, **characterized in that** the method comprises: uniformly mixing raw materials, melting the mixture at 1350-1400 °C, stirring, fining, and forming at 1150-1250 °C to obtain the glass blank;
annealing the glass blank at 500-620 °C, and then performing core drilling, cylindrical grinding, slicing, and step machining to obtain a stepped glass blank; then subjecting the stepped glass blank to reduction treatment, wherein after the reduction treatment the light-absorbing layer is formed on a surface of the stepped glass blank; and grinding off and polishing the light-absorbing layers on the upper and lower surfaces of the stepped glass blank to expose a transparent glass part, while retaining the light-absorbing layer on the step surface, thereby obtaining the anti-halation photoelectric glass having strong stray-light absorption.

41. An optical element that is made of the glass composition according to any one of claims 1 to 30 or the glass blank according to claim 31 or 32 or that comprises the anti-halation photoelectric glass having strong stray-light absorption according to any one of claims 33 to 38.

42. The optical element according to claim 41, **characterized in that** the optical element is an optical window.

43. The optical element according to claim 41, **characterized in that** the optical element is an anti-veiling-glare glass input window.

44. A low-light-level image intensifier comprising the optical element according to any one of claims 41 to 43.

45. The low-light-level image intensifier according to claim 44, **characterized in that** the optical element is an anti-veiling-glare glass input window.

46. Use of the glass composition according to any one of claims 1 to 30, or the glass blank according to claim 31 or 32, or the anti-halation photoelectric glass having strong stray-light absorption according to any one of claims 33 to 38, or the optical element according to any one of claims 41 to 43, or the low-light-level image intensifier according to claim 44 or 45 in the optical field or the field of intelligent technology applications.

47. The use according to claim 46, **characterized in that** the use is as an optical window.

48. The use according to claim 46, **characterized in that** the use is for preparing an anti-veiling-glare glass input window of a low-light-level image intensifier.

49. The use according to claim 46, **characterized in that** the use is for preparing an optical system component of a low-light-level night-vision device.
